# EUROPEAN PATENT APPLICATION

(11) **EP 4 624 440 A1**
(43) Date of publication of application: **01.10.2025**
(21) Application number: 24770848.0
(22) Date of filing: 11.03.2024
(51) Int. Cl.: C04B 35/66, C04B 35/043, F27D 1/00, F27D 1/04

(54) **METHOD FOR MANUFACTURING UNFIRED BASIC BRICK**

(30) Priority: 13.03.2023 JP 2023038927
(71) Applicant: Krosakiharima Corporation, Kitakyushu-shi, Fukuoka 806-8586 (JP)
(72) Inventor: KAWANO, Hayate, Kitakyushu-shi, Fukuoka 806-8586 (JP); TOKUNAGA, Ryuuji, Kitakyushu-shi, Fukuoka 806-8586 (JP)
(74) Representative: Vossius & Partner Patentanwälte Rechtsanwälte mbB
(86) International application number: PCT/JP2024/009366
(87) International publication number: WO 2024/190742

(57) **Abstract**

The present invention provides a manufacturing method for an unfired basic brick having excellent corrosion resistance. In the present invention, the method comprises: adding water to a refractory raw material mixture which contains: at least one of magnesia having a particle size of less than 75 µm and magnesia-chrome having a particle size of less than 75 µm, at a rate of 0.2% by mass to 30% by mass in total; and silica having a particle size of less than 75 µm, at a rate of 0.3% by mass to 2.5% by mass; and subjecting the resulting mixture to kneading, press-molding, and then heat treatment at a temperature of 60°C to 1000°C.

## Description

### TECHNICAL FIELD

The present invention relates to a manufacturing method for an unfired basic brick, which is used in the iron and steel field or the like, as a lining material for molten metal containers, or the like.

### BACKGROUND ART

As a lining material for molten metal containers used in the iron and steel field or the like, basic bricks, such as a magnesia-chrome brick, a magnesia brick, and a magnesia-carbon brick, are widely used. Among them, the magnesia-carbon brick is typically an unfired brick which contains a carbonaceous raw material such as graphite, wherein an organic binder such as phenol resin is used as a binding material. However, in applications where wear damage due to oxidation or reduction is significant, fired basic bricks, such as a fired magnesia-chrome brick and a fired magnesia brick, are often used. In particular, the fired magnesia-chrome brick has high corrosion resistance because when it is fired at 1700°C or more, a spinel containing chrome develops to form a strong bond. On the other hand, such manufacturing of the magnesia-chrome brick requires an ultrahigh-temperature firing at 1700°C or more, and there are demerits such as CO₂ emission and cost increases. Therefore, an unfired basic brick manufacturing method which does not require firing at a high temperature has heretofore been studied.

For example, Patent Document 1 discloses a refractory material manufacturing method which comprises using a lithium salt of condensed phosphate in which the ratio by weight of Li₂O/P₂O₅ is in the range of 2.5/7.5 to 1.5/8.5, as a binder, in an amount of 0.5 to 5 parts by weight, with respect to 100 parts by weight of aggregates whose MgO component is adjusted to a range exceeding 50% by mass. However, in a brick obtained by the manufacturing method of the Patent Document 1, there are: a concern that Li in the lithium salt of condensed phosphate reacts with SiO₂ and Al₂O₃ components during use, leading to a decrease in liquid-phase formation temperature, causing a deterioration in corrosion resistance; and a concern that a lithium component reacts with a chrome component in the magnesia-chrome brick to form lithium dichromate containing hexavalent chromium. Further, there is a problem that the lithium salt of condensed phosphate is expensive, and fails to provide durability which is commensurate with manufacturing costs.

Patent Document 2 discloses an unfired magnesia-chrome brick manufacturing method which comprises: adding 0. 5 to 3.5 parts by weight of soda aluminate (sodium hydroxide aluminate) to 100 parts by weight of a refractory composition comprising a magnesia-based raw material and chromia-based raw material; kneading the resulting mixture; and then subjecting the resulting kneaded mixture to pressure-forming, and drying at a temperature of 100 to 500°C. Further, the Patent Document 2 includes the following description: "the soda aluminate has a function of reacting and sintering, from relatively low temperatures, with materials added in a binding part, such as magnesia, chrome ore, and chrome oxide, to form a composite spinel to produce strength. Therefore, in a temperature range during use, even more corrosion-resistant composite spinel is additionally formed without large change in strength from a working surface to the rear, or occurrence of crack and peel-off due to thermal spalling, thereby providing high corrosion resistance." (paragraph [0018]). However, there is a problem that Na in the soda aluminate reacts with SiO₂ and Al₂O₃ components during use, to lower the liquid-phase formation temperature, and also form a low-melting-point substance including silicate soda (2 Na₂O · SiO₂, Na₂O · SiO₂, Na₂O · 2SiO₂), and albite (NaAlSi₃O₈), thereby causing a deterioration in corrosion resistance, and also reacts with a chrome component in the magnesia-chrome brick to form hexavalent chromium.

Patent Document 3 discloses a refractory article manufacturing method which comprises: adding water to refractory aggregates containing magnesia and fumed silica to form a mixture; forming the mixture into an article; and then subjecting the article to curing and drying. However, a basic brick manufactured by the manufacturing method of the Patent Document 3 has a problem of insufficient corrosion resistance.

### PRIOR ART DOCUMENTS

### [Patent Document]

Patent Document 1: JP S63-24944 B2
Patent Document 2: JP H11-157917 A
Patent Document 3: JP 2015-44734 A

### SUMMARY OF INVENTION

### [Technical Problem]

The technical problem to be solved by the present invention is to provide a manufacturing method for an unfired basic brick having excellent corrosion resistance.

### [Solution to Technical Problem]

The summary of the present invention is as follows.
1. A method of manufacturing an unfired basic brick, the method comprising: adding water to a refractory raw material mixture which contains: at least one of magnesia having a particle size of less than 75 µm and magnesia-chrome having a particle size of less than 75 µm, at a rate of 0.2% by mass to 30% by mass in total; and silica having a particle size of less than 75 µm, at a rate of 0.3% by mass to 2.5% by mass; and subjecting the resulting mixture to kneading, press-molding, and then heat treatment at a temperature of 60°C to 1000°C.
2. The method as set forth in the 1, wherein light-fired magnesia is used as the magnesia having a particle size of less than 75 µm, and silica flour is used as the silica having a particle size of less than 75 µm.
3. The method as set forth in the 1 or 2, wherein the heat treatment comprises heat curing.

### [Advantageous Effects of Invention]

Since an unfired basic brick obtained by the manufacturing method according to the present application does not contain any alkali component such as Li, K, or Na, it is possible to provide excellent corrosion resistance and extend the usable life of a molten metal container. It is also possible to suppress the formation of hexavalent chromium due to heat-receiving during use. In addition, the unfired basic brick has high hot strength at 600 to 1000°C, and, when used as a lining material for molten metal containers, exhibits a great effect of suppressing peel-off of a working surface caused by brittleness of the microstructure of the brick.

### BRIEF DESCRIPTION OF THE DRAWINGS

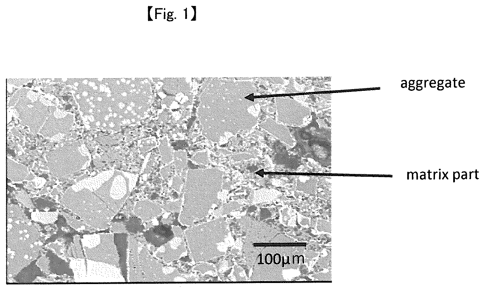

FIG. 1 is a scanning electron microscope (SEM) photograph showing one example of the microstructure of an unfired basic brick according to the present invention.

### DESCRIPTION OF EMBODIMENTS

The present inventors have found that an unfired basic brick having sufficient strength and corrosion resistance can be obtained by: adding water to a refractory raw material mixture containing at least one of a magnesia fine powder and a magnesia-chrome fine powder, and a silica fine powder; and subjecting the resulting mixture to kneading, press-molding, and then heat treatment at a temperature of 60°C to 1000°C

The mechanism is considered as follows. At least one of a magnesia fine powder and a magnesia-chrome fine powder, and a silica fine powder, form gel-like magnesium silicate hydrate in the presence of water. Thus, when the water content of a brick decreases through the heat treatment even at a temperature of 60°C or more, the magnesium silicate hydrate functions as a binder in a matrix part of the brick. Subsequently, even when the magnesium silicate hydrate is dehydrated due to a rise in the temperature of the brick, the strength of the brick is maintained because magnesium silicate having an amorphous bond network is formed. When the brick is further subjected to heat, the amorphous magnesium silicate is transformed into forsterite, so that it is possible to suppress a reduction in the strength over a temperature range up to a use temperature of the brick. This bond network of magnesium silicate is characterized in that it has high hot strength, particularly, at 600 to 1000°C, and when used as a lining material for molten metal containers, it exhibits a great effect of suppressing peel-off of a working surface caused by brittleness of the microstructure of the brick.

In the present invention, as a magnesia component for forming magnesium silicate hydrate, at least one of a magnesia fine powder and a magnesia-chrome fine powder is used at a content rate of 0.2% by mass to 30% by mass in total, in terms of a percentage in 100% by mass of the refractory raw material mixture. Since as the particle size of the magnesia fine powder and the magnesia-chrome fine powder becomes smaller, it becomes easier to form hydrate in the presence of water, a specific value of the particle size of them to be used is less than 75 µm. That is, in the present invention, the refractory raw material mixture contains at least one of a magnesia fine powder, which is magnesia having a particle size of less than 75 µm, and a magnesia-chrome fine powder, which is magnesia-chrome having a particle size of less than 75 µm, at a rate of 0.2% by mass to 30% by mass in total. If the total content rate of the magnesia fine powder and the magnesia-chrome fine powder is less than 0.2% by mass, a binding microstructure in the brick microstructure becomes insufficient, leading to poor strength. On the other hand, if the total content rate exceeds 30% by mass, moldability is deteriorated due to too much fine powders, causing occurrence of lamination, and a deterioration in corrosion resistance.

In the present invention, light-fired magnesia (i.e., light-burned magnesia) may be used as the magnesia fine powder. The light-fired magnesia is obtained by firing magnesite, magnesium hydroxide, or the like at a relatively low temperature of, e.g., 1400°C or less, typically 1000 to 1400°C. Generally, it is also referred to as "active magnesia" or "calcined magnesia", wherein it has an average particle size of 1 µm or less. Since this light-fired magnesia has a large specific surface area and is highly active, it is easily dissolved in water as compared with sintered magnesia or electrofused magnesia. Thus, the bond network of magnesium silicate is well developed in the brick microstructure, so that it is possible to increase the strength of the brick. This light-fired magnesia may be used at a content rate of 0.2% by mass to 5% by mass in terms of a percentage in 100% by mass of the refractory raw material mixture.

Furter, in the present invention, as a silica component for forming magnesium silicate hydrate, a silica fine powder, which is silica having a particle size of less than 75 µm, is used at a content rate of 0.3% by mass to 2.5% by mass in terms of a percentage in 100% by mass of the refractory raw material mixture. If the content rate of the silica fine powder is less than 0.3% by mass, the binding strength of the brick microstructure becomes insufficient. On the other hand, if the content rate exceeds 2.5% by mass, a flux component in the brick microstructure increases, leading to a deterioration in corrosion resistance.

As the silica fine power, it is possible to employ silica flour, fused silica, silica sol, or a fine powder of silica stone. It should be noted here that since the silica sol is in liquid form, the content rate thereof is a value converted to SiO₂.

Further, in the present invention, the silica flour is fine-particle silica having an average particle size of 10 µm or less, and refers correctively to silica fume, fumed silica, and white carbon. The silica fume is a by-product obtained by collecting exhaust gas generated in a refining process of ferrosilicon, metal silicon, electrofused zirconia, or the like, and is available relatively inexpensively. The fumed silica is produced by hydrolyzing a silicon compound such as silicon tetrachloride as a raw material, in a flame of oxygen and hydrogen. The white carbon is obtained by decomposition sodium silicate using acid or alkali. Since these silica flours are easily dissolved in alkaline water in which the magnesia fine powder is partially dissolved, the bond network of magnesium silicate is well developed in the brick microstructure, so that it is possible to increase the strength of the brick.

In the basic brick manufacturing method according to the present invention, one feature is in that a conventional refractory raw material mixture for a fired magnesia-chrome brick or a fired magnesia brick is modified such that the total content rate of at least one of a magnesia-chrome fine powder and a magnesia fine powder is set in the range of 0.2% by mass to 30% by mass, and the content rate of a silica fine powder is set in the range of 0.3% by mass to 2.5% by mass, and another feature is in that the method comprises: adding water to the modified refractory raw material mixture; and subjecting the resulting mixture to kneading, press-molding, and then heat treatment at a temperature of 60°C to 1000°C. That is, in the modified refractory raw material mixture, as any refractory raw material other than the above-mentioned refractory raw materials, it is possible to employ the same as that of the conventional refractory raw material mixture. For example, when manufacturing an unfired magnesia brick, the remainder of the refractory raw material mixture may be magnesia having a particle size of 75 µm or more. On the other hand, when manufacturing an unfired magnesia-chrome brick, the remainder of the refractory raw material mixture may comprise at least one of magnesia having a particle size of 75 µm or more and a magnesia-chrome having a particle size of 75 µm or more, and may further comprise at least one of chrome ore and chrome oxide as a chrome source. It should be noted that, in the refractory raw material mixture for the unfired magnesia-chrome brick, the total content rate of the magnesia having a particle size of 75 µm or more and the magnesia-chrome having a particle size of 75 µm or more may be set in the range of 30% by mass to 80% by mass.

Here, the term "particle size" in the present invention means a sieve mesh size when refractory raw material particles are screened and separated by a sieve. For example, magnesia having a particle size of less than 75 µm means magnesia which can pass through a sieve having a mesh size of 75 µm, and magnesia having a particle size of 1 mm or more means magnesia which cannot pass through the sieve having a mesh size of 75 µm.

Further, the term "average particle size" in the present invention means a volume average particle size corresponding to a median cumulative value (D50) of a cumulative curve measured by a laser diffraction scattering particle size distribution meter.

The magnesia-chrome used in the present invention is a synthetic raw material obtained by fusing magnesia and chrome ore in an arc furnace, and is also referred to as electrofused magnesia-chrome clinker, electrofused magnesia-chrome, fused magnesia-chrome, and the like. As such magnesia-chrome, it is possible to employ magnesia-chrome commonly used as a raw material for refractory products.

Further, as the magnesia used in the present invention, it is possible to employ magnesia commonly used as a raw material for refractory products, such as electrofused magnesia, or sintered magnesia.

Further, as a chrome source of the magnesia-chrome brick, it is possible to employ at least one of chromium ore and chrome oxide, as mentioned above. In this case, the content rate of chromium ore may be set to 40% by mass or less, and the content rate of chrome oxide may be set to 10% by mass or less. As the chromium ore, it is possible to employ naturally-occurring chromium ore.

In addition to the above, the refractory raw material mixture in the present invention may contain one or more of the group consisting of a metal powder, silicon carbide, graphite, pitch, carbon black, boron carbide, spinel, alumina, and zirconia, at a rate of 5% by mass or less.

In the basic brick manufacturing method according to the present invention, water is added to the above-mentioned refractory raw material mixture, and the resulting mixture is kneaded and press-molded. Basically, the addition of water only makes it possible to obtain sufficient strength after the press-molding. However, when a molded body after the press-molding requires strength because of its special shape or the like, an organic binder commonly used in the manufacturing of refractory products, such as phenol resin, may be used in combination. Alternatively, a binder containing water in a solvent thereof, so-called "water-containing binder", may be used alone. That is, as used in the present invention, the term "water" is a concept including water in the water-containing binder, and the term "adding water" means adding at least one of water, and a water-containing binder. Examples of the water-containing binder include a mixture of water, and an organic binder compatible with water.

In the basic brick manufacturing method according to the present invention, gel-like magnesium silicate hydrate, which is an amorphous compound comprising magnesia and silica, is contained in the molded body after the press-molding, as mentioned above. Thus, during the heat treatment after the press-molding, the water content of the molded body decreases from the time when the temperature of the heat treatment is 60°C, so that the magnesium silicate hydrate functions as a binder in the matrix part of the brick microstructure. Since a higher temperature of the heat treatment provides increased strength, the heat treatment temperature may be set according to the intended purpose. Sufficient strength required for an application to a commonly-used lining for molten metal containers can be obtained by heat treatment at a temperature less than 600°C. However, when higher strength is required due to severe use conditions, the heat treatment may be performed at 600°C or more. Under heat treatment at a temperature of less than 600°C, the magnesium silicate hydrate is in an amorphous form. On the other hand, through the heat treatment at 600°C or more, the amorphous magnesium silicate hydrate starts to transform into forsterite, which is a crystalline compound comprising magnesia and silica. As a result, a bond network having a stronger binding strength is formed, and the brick is improved in terms of strength. However, even when the heat treatment is performed at a temperature of greater than 1000°C, the strength improving effect corresponding to an increase in heat treatment costs is not obtained. Thus, a heat treatment temperature of 1000°C or less is sufficient.

Further, in the basic brick manufacturing method according to the present invention, heat curing may be performed after the press-molding to promote the formation of the magnesium silicate hydrate, thereby further increasing the strength of the brick. As conditions for the heat curing, the molded body may be held at 60 to 180°C for one hour or more. As used in the present invention, the term "heat curing" is one type of heat treatment and is included in the concept of heat treatment. That is, when performing the heat curing, the heat treatment needs not be performed again. This is because required strength can be obtained only by the heat curing. However, when there is the need to further increase the strength, the heat treatment may be performed again after the heat curing.

When an unfired basic brick obtained by the above manufacturing method is specified as a "product", it is "an unfired basic brick which contains at least one of magnesia-chrome and magnesia at a rate of 56% by mass to 99.7% by mass in total, and contains a compound of magnesia and silica in a matrix part thereof." Here, the content rate of the magnesia-chrome and magnesia in the unfired basic brick can be obtained by calculation from the composition or the like of the refractory raw material mixture.

As mentioned above, when the heat treatment temperature is less than 600°C, the unfired basic brick includes an amorphous compound comprising magnesia and silica in the matrix part thereof. This amorphous compound is magnesium silicate hydrate, and is present in the matrix part to function as a binder for particles. The magnesium silicate hydrate generally can be expressed by xMgO · ySiO₂ · nH₂O, and there are various forms depending on conditions.

The magnesium silicate hydrate does not comprise any alkali component such as Na, K, or Li. Thus, the magnesium silicate hydrate does not form any low-melting-point substance during use, thereby avoiding causing a deterioration in corrosion resistance, nor does it cause the formation of hexavalent chromium.

When the heat treatment temperature is set in the range of 600°C to 1000°C, part or the entirety of the magnesium silicate hydrate is transformed into forsterite (2 MgO · SiO₂). Forsterite has a melting point of 1880°C, and exhibits sufficient strength within a temperature range from about 600°C to a use temperature of around 1600°C.

Here, the microstructure of the unfired basic brick comprises an aggregate part composed of aggregates and a matrix part which is a binding microstructure for binding the aggregates together. In the unfired basic brick according to the present invention, the aggregates are particles having a particle size of 75 µm or more, and the matrix part is a microstructural portion which lies between the aggregates and in which particles having a particle size of less than 75 µm are continuously present (see FIG. 1).

### EXAMPLES

Table 1 shows the composition of a refractory raw material mixture in each of Inventive Examples and Comparative Examples, and evaluation results of the obtained bricks.

**TABLE 1**

| | | Comparative Example 1 | Inventive Example 1 | Inventive Example 2 | Inventive Example 3 | Inventive Example 4 | Inventive Example 5 | Inventive Example 6 | Comparative Example 2 | Comparative Example 3 | Inventive Example 7 | Inventive Example 8 |
|---|---|---|---|---|---|---|---|---|---|---|---|---|
| Magnesia/mass% | 1mm or more | 51 | 51 | 49 | 46 | 46 | 39 | 20 | 10 | 49 | 48,7 | 48 |
| | 75µm to less than 1mm | 8 | 7,8 | 9 | 8 | 8 | 20 | 10 | 38 | 9 | 9 | 9,3 |
| | less than 75µm | | | | | 5 | 15 | 30 | 35 | 5 | 5 | 5 |
| Light-fired magnesia/mass% | less than 75µm | | 0,2 | 1 | 5 | | | | | 2 | 2 | 2 |
| Chrome ore/mass% | 1mm or more | | | | 5 | 5 | 15 | 19 | 16 | 3 | 3 | 3 |
| | 75µm to less than 1mm | 20 | 20 | 20 | 20 | 20 | 5 | 20 | | 20 | 20 | 20 |
| | less than 75µm | 20 | 20 | 20 | 15 | 15 | 5 | | | 12 | 12 | 12 |
| Silica flour/mass% | less than 75µm | 1 | 1 | 1 | 1 | 1 | 1 | 1 | 1 | | 0,3 | 0,7 |
| Silica stone/mass% | less than 75µm | | | | | | | | | | | |
| Silica sol/mass% | SiO₂ 40 mass% | | | | | | | | | | | |
| Total of refractory raw material mixture/mass% | | 100 | 100 | 100 | 100 | 100 | 100 | 100 | 100 | 100 | 100 | 100 |
| Water /mass% | | 3 | 3 | 3 | 3 | 3 | 3 | 3 | 3 | 3 | 3 | 3 |
| Modulus of rupture at normal temperature/MPa | Heat treatment at 100°C | | | 6,1 | 9,4 | 7,1 | 8,9 | | | | | |
| | Heat treatment at 250°C | 3,5 | 4,2 | 6,5 | 10,2 | 7,5 | 10,3 | 12,4 | 5,2 | 3,3 | 7,3 | 7,7 |
| | Heat treatment at 600°C | | | 7,8 | 11,6 | 9,2 | 11,0 | | | | | |
| | Heat treatment at 1000°C | | | 10,8 | 14,8 | 12,1 | 14,6 | | | | | |
| | Heat curing | | | 9,2 | 12,5 | 10,3 | 12,1 | | | | | |
| | Heat treatment after heat curing | | | 12,3 | 17,8 | 13,4 | 17,2 | | | | | |
| Hot modulus of rupture /MPa | | 2,2 | 2,5 | 8,0 | 12,1 | 9,0 | 11,2 | 12,8 | 2,4 | 2,5 | 8,1 | 9,1 |
| Corrosion resistance (Index) | | 100 | 88 | 81 | 82 | 81 | 86 | 88 | 103 | 103 | 82 | 81 |

| | | Inventive Example 9 | | Inventive Example 10 | | | Inventive Example 11 | | | Comparative Example 4 | | |
|---|---|---|---|---|---|---|---|---|---|---|---|---|
| Magnesia/mass% | 1mm or more | 48 | | 48 | | | 46,5 | | | 46 | | |
| | 75µm to less than 1mm | 9 | | 9 | | | 9 | | | 9 | | |
| | less than 75µm | 5 | | 5 | | | 5 | | | 5 | | |
| Light-fired magnesia/mass% | less than 75µm | 2 | | 2 | | | 2 | | | 2 | | |
| Chrome ore/mass% | 1mm or more | 3 | | 3 | | | 3 | | | 3 | | |
| | 75µm to less than 1mm | 20 | | 20 | | | 20 | | | 20 | | |
| | less than 75µm | 12 | | 12 | | | 12 | | | 12 | | |
| Silica flour/mass% | less than 75µm | | | | | | 2,5 | | | 3 | | |
| Silica stone/mass% | less than 75µm | 1 | | | | | | | | | | |
| Silica sol/mass% | SiO₂ 40 mass% | | | 1 | | | | | | | | |
| Total of refractory raw material mixture/mass% | | 100 | | 100 | | | 100 | | | 100 | | |
| Water /mass% | | 3 | | 1,5 | | | 3 | | | 3 | | |
| Modulus of rupture at normal temperature/MPa | Heat treatment at 100°C | | | | | | | | | | | |
| | Heat treatment at 250°C | 6,4 | | 8,1 | | | 13,4 | | | 17,8 | | |
| | Heat treatment at 600°C | | | | | | | | | | | |
| | Heat treatment at 1000°C | | | | | | | | | | | |
| | Heat curing | | | | | | | | | | | |
| | Heat treatment after heat curing | | | | | | | | | | | |
| Hot modulus of rupture /MPa | | 7,7 | | 9,9 | | | 15,7 | | | 15,0 | | |
| Corrosion resistance (Index) | | 80 | | 84 | | | 88 | | | 106 | | |

| | | Comparative Example 5 | Inventive Example 12 | Inventive Example 13 | Inventive Example 14 | Comparative Example 6 | Inventive Example 15 | Inventive Example 16 | Comparative Example 7 | Inventive Example 17 | Comparative Example 10 | Comparative Example 11 |
|---|---|---|---|---|---|---|---|---|---|---|---|---|
| Magnesia/mass% | 1mm or more | 51 | 46 | | | | | 31 | 31 | 50 | 35 | |
| | 75µm to less than 1mm | | | | | | 5 | 20 | 20 | 30 | 20 | |
| | less than 75µm | | | | | | | 15 | 15 | 17 | 15 | |
| Light-fired magnesia/mass% | less than 75µm | | | | | | 5 | 3 | 3 | 2 | | |
| Magnesia-chrome/mass% | 1mm or more | | | 54 | 34 | 44 | 49 | | | | | 54 |
| | 75µm to less than 1mm | 5 | 5 | 23 | 32 | 12 | 30 | | | | | 20 |
| | less than 75µm | | 5 | 14 | 30 | 40 | 7 | | | | | 23 |
| Chrome ore/mass% | 1mm or more | | 5 | | | | | 10 | 10 | | 10 | |
| | 75µm to less than 1mm | 20 | 20 | | | | | 10 | 10 | | 10 | |
| | less than 75µm | 20 | 15 | 5 | | | | 10 | 10 | | 10 | |
| Chrome oxide/mass% | | 3 | 3 | 3 | 3 | 3 | 3 | | | | | 3 |
| Silica flour/mass% | less than 75µm | 1 | 1 | 1 | 1 | 1 | 1 | 1 | 1 | 1 | | |
| Total of refractory raw material mixture/mass% | | 100 | 100 | 100 | 100 | 100 | 100 | 100 | 100 | 100 | 100 | 100 |
| Water /mass% | | 3 | 3 | 3 | 3 | 3 | 3 | 1 | | 3 | 3 | 3 |
| Phenol resin/mass% | | | | | | | | 2 | | | | |
| Furfural/mass% | | | | | | | | | 3 | | | |
| Modulus of rupture at normal temperature/MPa | Heat treatment at 250°C | 3,5 | 6,6 | 8,6 | 9,0 | 5,2 | 10,5 | 18,0 | 3,3 | 17,5 | 5,2 | 6,1 |
| Hot modulus of rupture /MPa | | 2,2 | 8,8 | 9,3 | 10,3 | 2,4 | 12,3 | 8,5 | 2,4 | 12,0 | 6,2 | 7,3 |
| Corrosion resistance (Index) | | 100 | 80 | 81 | 85 | 105 | 82 | 86 | 102 | - | 84 | 80 |

Among refractory raw materials, as magnesia, electrofused magnesia and light-fired magnesia each having a MgO purity of 98% by mass were used, and as magnesia-chrome and chrome ore, electrofused magnesia-chrome containing 74% by mass of MgO and 16% by mass of Cr₂O₃, and chrome ore containing 55% by mass of Cr₂O₃, 14% by mass of Fe₂O₃, 16% by mass of MgO, and 11% by mass of Al₂O₃, were used, respectively. Further, as a silica fine powder having a particle size of less than 75 µm, silica flour comprising 98% of a SiO₂ component, silica stone fine powder comprising 98% of a SiO₂ component, and silica sol comprising 40% of a SiO₂ component, were used. Note that the content rate of silica sol shown in Table 1 is a value converted to SiO₂, as mentioned above. Phenol resin used was a type containing ethylene glycol as a solvent.

In any Example other than Comparative Examples 10 and 11 each of which is a fired brick subjected to firing at 1750°C, an unfired basic brick was prepared by: adding water, phenol resin, and/or furfural to each refractory raw material mixture at an additive rate listed in Table 1; kneading the resulting mixture; molding the kneaded mixture into a shape of 230 mm × 114 mm × 100 mm by oil press; and then subjecting the resulting molded body to heat treatment at 250°C for a holding time of 5 hours. Further, with regard to each of Invective Examples 2 to 5, four unfired basic bricks subjected to hear treatment at different temperatures, an unfired basic brick subjected to heat curing at 80°C, and an unfired basic brick subjected to heat curing at 80°C and then heat treatment at 110°C were prepared. Samples for measuring physical properties were cut out from these bricks, and subjected to measurements of modulus of rupture at normal temperature and modulus of rupture at 600°C and to a corrosion resistance test.

The modulus of rupture at normal temperature was measured by three-point bending method. Specifically, a reed-shaped sample having a size of 20 × 20 × 80 mm was prepared, and subjected to measurement of the modulus of rupture at a pressing speed of 1.65 kN/s. The measurement of the modulus of rupture at 600°C was conducted by three-point bending on the brick in each Example, obtained at a heat treatment temperature of 250°C. Specifically, a reed-shaped sample having a size of 20 × 20 × 80 mm was prepared, and heated up to 600°C in a preheating furnace. Then, the sample was transferred to a test furnace, where after reaching 600°C, it was held for 20 minutes, and subjected to measurement of the hot modulus of rupture at a crosshead speed of 0.05 mm/s.

Corrosion resistance was evaluated by a rotation corrosion test. In the rotation corrosion test, the inner surface of a drum having a horizontal rotation axis was lined with a brick under test, and slag was charged into the drum and heated, thereby causing corrosion of the surface of the brick. An oxygen-propane burner was used as a heating source, and a test temperature was set to 1700°C. Further, the slag had a composition of CaO: 30% by mass, SiO₂: 30% by mass, Al₂O₃: 20% by mass, and FeO + Fe₂O₃: 20% by mass, and the discharge and charge of the slag were repeated ten times every 30 minutes. After completion of the test, a corrosion amount (mm) was obtained from the difference (mm) between thicknesses before and after the test at the maximum worn area of each brick. Then, a wear index on the basis of the corrosion amount (mm) of "Comparative Example 1" listed in Table 1 being taken as 100 was obtained. A smaller value of this wear index indicates better corrosion resistance.

A cut surface of the brick in each Example obtained at a heat treatment temperature of 250°C was observed by microscopic infrared spectroscopy and microscopic Raman spectroscopy. As a result, a spectrum indicative of the presence of an amorphous compound comprising magnesia and silica could be ascertained in the matrix part of the brick, except for Comparative Examples 3, 7, 10, and 11. Then, after the bricks in each of which the presence of the amorphous compound has been ascertained were further heat-treated at 800°C, the formation of forsterite could be ascertained by X-ray powder diffraction analysis, and the presence of a compound having a forsterite composition in the matrix part was ascertained by a scanning electron microscope and an energy dispersive X-ray spectroscopy (EDS). In this way, it has been ascertained that forsterite is formed in the matrix part of the brick after the heat treatment at 800°C.

Inventive Examples 1 to 6, which are different from each other in terms of the content rate of a magnesia fine powder, i.e., magnesia having a particle size of less than 75 µm, but fall within the scope of the present invention, had a good result. Further, from the results of Inventive Examples 2 to 5 in which conditions for the heat treatment are varied, it can be seen that strength tends to become higher as the heat treatment temperature becomes higher. It is also understood that even when the heat treatment temperature is relatively low, high strength can be obtained by performing heat curing as the heat treatment.

On the other hand, Comparative Example 1, in which no magnesia fine powder is contained, had poor strength, and was also insufficient in terms of corrosion resistance. Further, Comparative Example 2, in which the content rate of the magnesia fine powder exceeds the upper limit of the present invention, had deteriorated corrosion resistance.

Inventive Examples 7 to 11, which are different from each other in terms of the content rate of a silica fine powder, i.e., silica having a particle size of less than 75 µm, but fall within the scope of the present invention, had a good result. On the other hand, Comparative Example 3, in which no silica fine powder is contained, had poor strength, and was also insufficient in terms of corrosion resistance. Further, in Comparative Example 4, in which the content rate of the silica fine powder exceeds the upper limit of the present invention, corrosion resistance was deteriorated.

Inventive Examples 12 to 14, which are different from each other in terms of the content rate of a magnesia-chrome fine powder, i.e., magnesia-chrome having a particle size of less than 75 µm, but fall within the scope of the present invention, had a good result. On the other hand, Comparative Example 5, in which no magnesia-chrome fine powder is contained, had poor strength, and was also insufficient in terms of corrosion resistance. Further, Comparative Example 6, in which the content rate of the magnesia-chrome fine powder exceeds the upper limit of the present invention, had deteriorated corrosion resistance.

Inventive Example 15, which uses the magnesia fine powder and the magnesia-chrome fine powder in combination, but fall within the scope of the present invention, had a good result.

Inventive Example 16, in which water and phenol resin are added to the refractory raw material mixture, exhibited high hot modulus of rupture, and also had a good result in terms of corrosion resistance. On the other hand, Comparative Example 7, in which furfural containing no water is added to the refractory raw material mixture, was deteriorated in terms of hot modulus of rupture, and was also insufficient in terms of corrosion resistance.

Inventive Example 17 is an example of an unfired magnesia brick, and is assumed to be used as a permanent brick which rarely comes into direct contact with molten steel or slag. Thus, since comparison with other unfired magnesia-chrome bricks in terms of corrosion resistance is not meaningful, no corrosion resistance test was performed thereon. However, from the results of the modulus of ruptures, it has been determined that Inventive Example 17 is within a range in which the brick is sufficiently usable in an actual furnace.

Comparative Examples 10 and 11 are conventional magnesia-chrome brick fired at 1750°C. All of Inventive Examples 1 to 17 had corrosion resistance equivalent to those of the conventional magnesia-chrome bricks.

## Claims

1. A method of manufacturing an unfired basic brick, the method comprising:
adding water to a refractory raw material mixture which contains: at least one of magnesia having a particle size of less than 75 µm and magnesia-chrome having a particle size of less than 75 µm, at a rate of 0.2% by mass to 30% by mass in total; and silica having a particle size of less than 75 µm, at a rate of 0.3% by mass to 2.5% by mass;
and subjecting the resulting mixture to kneading, press-molding, and then heat treatment at a temperature of 60°C to 1000°C.

2. The method as claimed in claim 1, wherein light-fired magnesia is used as the magnesia having a particle size of less than 75 µm, and silica flour is used as the silica having a particle size of less than 75 µm.

3. The method as claimed in claim 1 or 2, wherein the heat treatment comprises heat curing.
